# FASCICULE DE BREVET EUROPEEN

(11) **EP 3 682 991 B1**
(45) Date de publication et mention de la délivrance du brevet: **16.07.2025**
(21) Numéro de dépôt: 20151610.1
(22) Date de dépôt: 14.01.2020
(51) Int. Cl.: F16B 3/06, F16B 4/00

(54) **BAGUE ET DOUILLE DE SERRAGE A EXPANSION RADIALE**
SPANNRING UND -HÜLSE MIT RADIALER AUSDEHNUNG
RING AND SOCKET FOR TIGHTENING BY RADIAL EXPANSION

(30) Priorité: 16.01.2019 FR 1900391
(43) Date de publication de la demande: 22.07.2020
(73) Titulaire: Technic.com, 75019 Paris (FR)
(72) Inventeur: GAILLARD, Jean-Christophe, 75002 PARIS (FR)
(74) Mandataire: Demulsant, Xavier

(56) Documents cités:
- CH-A- 454 570
- CH-A5- 587 094
- FR-A- 1 047 719
- US-A- 2 612 376
- US-A- 3 438 660

## Description

La présente invention concerne une bague ainsi qu'une douille mettant en œuvre cette dernière qui sont destinées à assurer le serrage en vue du maintien d'une pièce, notamment une pièce à usiner, sur un dispositif porteur, tel que notamment un mandrin, et à appliquer la base de cette pièce contre un plan porteur de ce dispositif, et ceci à partir d'un logement cylindrique creusé dans la face de base de ladite pièce, dans lequel prend place ladite bague.

On a proposé des dispositifs assurant le maintien d'une pièce par rapport à un plan de référence, ou plan porteur, qui comportent pour ce faire un élément de préhension cylindrique qui vient se loger dans un logement de même forme et dimensions creusé dans la face de base de la pièce.

De tels éléments de préhension comportent, sur leur périphérie, une partie constituée d'un élastomère qui se déforme radialement sous l'action d'un organe d'actionnement, notamment mobile axialement, de façon que sa partie cylindrique vienne s'appliquer avec force contre la partie cylindrique du logement de la pièce, assurant ainsi le blocage de cette dernière.

Ces éléments de préhension, outre le fait qu'ils n'exercent aucun effort axial sur la piece à maintenir permettant d'appliquer la base de celle-ci sur un plan de référence, ne sont pas en mesure d'assurer un maintien réalisant un positionnement précis et répétitif.

On a également proposé des dispositifs de serrage assurant à la fois un maintien de la pièce et une application de la base de celle-ci contre un plan de référence. Ces dispositifs de serrage possèdent également un élément de préhension cylindrique dont la surface externe est formée d'une multiplicité de segments indépendants, ou mors, qui sont aptes à se déplacer d'une part radialement et d'autre part axialement sous l'action d'un organe de commande mobile axialement.

Si de tels dispositifs assurent bien à la fois un maintien radial de la pièce et une application de la base de celle-ci sur un plan de référence, et sont de ce fait utilisables pour assurer un maintien et un positionnement de la pièce qui est répétitive, ils ne sont cependant pas d'une précision suffisante dès lors que les tolérances de fabrication de la pièce doivent être ultra précises, de l'ordre par exemple de quelques µm, dans la mesure où le déploiement des divers segments de serrage s'est révélé être particulièrement sensible aux diverses perturbations auxquelles ces dispositifs sont habituellement exposés dans les centres d'usinage, tels que notamment les limailles la poussière etc ...

On connaît également par les brevets CH 587094, US 2612376 et CH 454570 des bagues de serrage qui sont formées d'une succession d'éléments de serrage liés entre eux. Cependant ces éléments de serrage en raison de leur constitution massive ne sont pas aptes à subir d'importantes variations dimensionnelles radiales sous peine de dépasser leur limite élastique ce qui implique soit une non réversibilité de la bague soit une rupture pure et simple de celle-ci.

FR 1 047 719 A et US 3 438 660 A divulguent des bagues de serrage ayant des sommets.

La présente invention a pour but de proposer une bague et une douille de serrage en mesure de subir des variations dimensionnelles de l'ordre de 1 à 2% de leur diamètre et permettant de réaliser le serrage d'une pièce à usiner qui assure à la fois un maintien précis et répétitif de celle-ci ainsi que l'application de sa base sur un plan de référence.

La présente invention a ainsi pour objet une bague de serrage et de maintien selon la revendication 1 destinée à prendre place dans un logement cylindrique réalisé dans la base d'une pièce que l'on souhaite immobiliser par rapport à un corps, cette bague étant formée d'une série d'éléments successifs adjacents cylindriques et/ou pseudo-cylindriques qui sont liés entre eux et dont la surface de base est en forme de oméga et comporte ainsi un sommet et deux branches, les sommets de ces éléments étant alternativement disposés sur l'extérieur et sur l'intérieur de la bague et formant respectivement un élément externe et un élément interne, caractérisé en ce que les branches reliant deux éléments adjacents sont communes et les éléments externes et les éléments internes forment des « coques » dont l'épaisseur est comprise entre 10% et 25% de la largeur des sommets des éléments externes.

Les éléments externes ou les éléments internes pourront être de forme cylindrique. Par ailleurs les éléments externes ou les éléments internes pourront être de forme pseudo-cylindrique.

Dans un mode de mise en oeuvre les branches qui relient deux éléments adjacents pourront être en forme de « S ». Dans un autre mode de mise en œuvre ces branches pourront être rectilignes.

Enfin la face intérieure des parois des éléments internes ou externes ayant un sommet pour base comporte une surépaisseur.

La présente invention a également pour objet une douille de serrage mettant en œuvre une bague de serrage telle que définie précédemment, cette bague pouvant se prolonger axialement d'un côté de celle-ci par un jambage se terminant par des pieds. Ces pieds pourront être orientés radialement vers l'extérieur ou vers l'intérieur de la douille.

La présente invention a également pour objet un dispositif de serrage destiné au maintien d'une pièce et à l'application de celle-ci sur un plan porteur, la base de la pièce étant creusée d'un logement cylindrique recevant une bague de serrage telle que définie précédemment, ce dispositif pouvant comporter un corps de mandrin cylindrique creusé d'un alésage axial dans lequel sera monté coulissant un piston dont la tête tronconique pourra être en appui contre une surface interne tronconique de la bague de serrage, des moyens de commande étant aptes à déplacer ce piston axialement de façon à exercer sur la surface interne de la bague de serrage un effort radial apte à la déformer radialement et appliquer sa surface externe contre la paroi cylindrique du logement et la base de la pièce contre le plan porteur.

La présente invention a également pour objet un dispositif de serrage destiné au maintien d'une pièce dont la base est creusée d'un logement cylindrique recevant la bague de serrage d'une douille de serrage telle que déterminée précédemment, ce dispositif pouvant comporter un corps de mandrin cylindrique dont l'une des extrémités sera pourvue d'un bossage autour duquel prendront place les jambages de la douille de serrage, qui se terminent par des pieds qui seront appliqués contre le corps de mandrin, la base de la pièce à maintenir venant en appui sur une face d'une collerette dont l'autre face sera elle-même en appui sur le corps de mandrin, ce dernier étant creusé d'un alésage axial dans lequel sera monté coulissant un piston dont la tête tronconique sera en appui contre la surface interne tronconique de la bague, des moyens de commande étant aptes à déplacer ce piston axialement de façon à exercer sur la surface interne de la bague un effort radial apte à la déformer radialement et appliquer sa surface externe contre la paroi cylindrique du logement. Par ailleurs les pieds pourront être maintenus appliqués contre le corps de mandrin par la collerette.

On décrira ci-après, à titre d'exemple non limitatif, des formes d'exécution de la présente invention, en référence au dessin annexé sur lequel :
- la figure 1 est une vue de dessus d'une bague de serrage suivant l'invention,
- la figure 2 est une vue en perspective de la bague de serrage représentée sur la figure 1,
- la figure 3 est une vue partielle agrandie de la bague de serrage représentée sur les figures 1 et 2,
- la figure 4 est une vue de face d'une variante de réalisation d'une bague de serrage suivant l'invention,
- la figure 5 est une vue partielle agrandie de la bague représentée sur la figure 4,
- la figure 6 est une vue en coupe axiale et longitudinale d'un mandrin de serrage d'une pièce à usiner mettant en oeuvre la bague de serrage suivant l'invention, le mandrin étant représenté dans une position de préserrage,
- les figures 7 et 8 sont des vues en perspective de deux variantes de mise en œuvre d'une douille de serrage suivant l'invention,
- la figure 9 est une vue en coupe axiale et longitudinale d'un mandrin de serrage d'une pièce à usiner au moyen d'une douille de serrage suivant l'invention, le mandrin étant représenté dans une position de préserrage,
- la figure 10 est une vue en coupe axiale et longitudinale partielle du mandrin de serrage de la figure 9, qui est représenté en position de serrage.

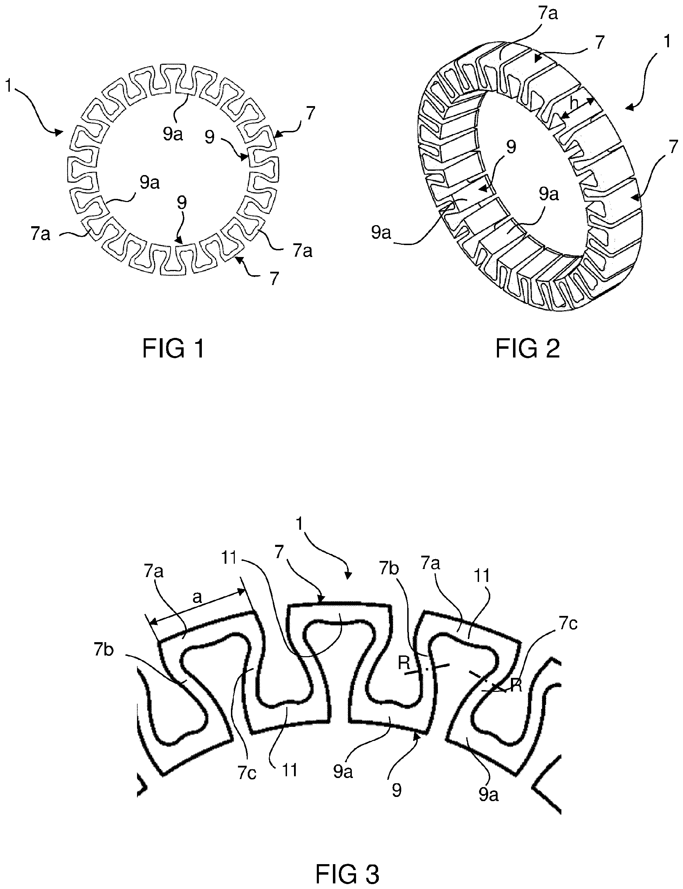

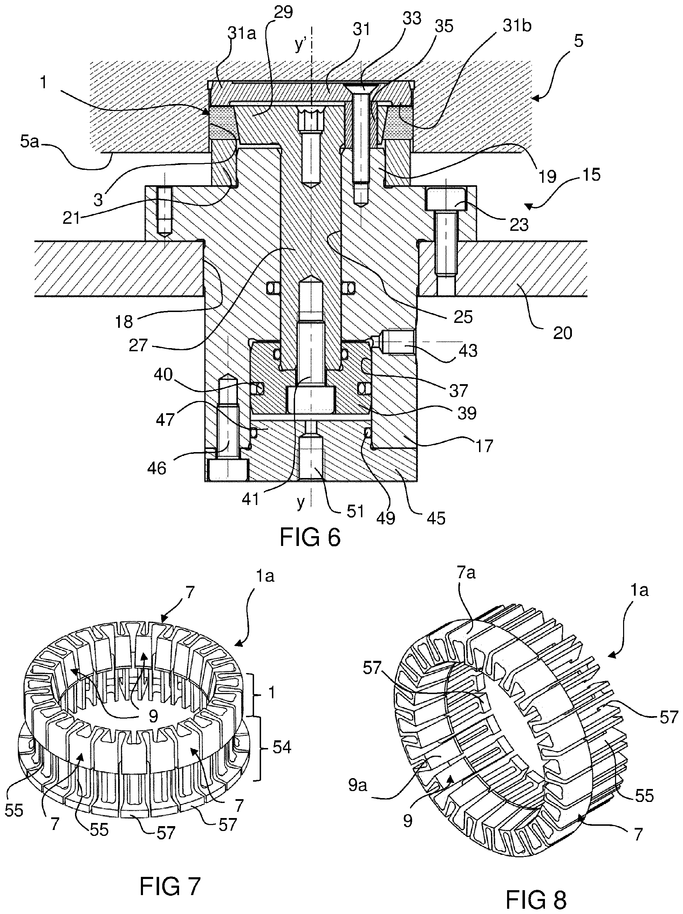

La figure 1 représente un exemple de réalisation d'une bague de serrage 1 suivant l'invention. Cette bague est destinée à prendre place dans un logement cylindrique 3 qui est creusé dans la base 5a d'une pièce à usiner 5 que l'on souhaite maintenir, ainsi que représenté sur la figures 6.

La bague 1, qui est représentée en vue de face sur la figure 1 et en perspective sur la figure 2, forme un anneau dont la surface externe, dans le présent mode de mise en œuvre, est de forme cylindrique et d'un diamètre externe égal au diamètre du logement cylindrique 3 et la surface interne est de forme tronconique ainsi qu'expliqué ci-après.

Plus précisément la bague de serrage 1 est formée d'une série d'éléments successifs qui sont réunis entre eux. La surface de base de chacun de ces éléments, qui est représentée sur la figure 3, est en forme de Ω si bien qu'elle comprend un sommet et deux branches. Ces différents éléments sont disposés de façon telle que le sommet est alternativement disposé sur l'extérieur et sur l'intérieur de la bague 1 si bien que la surface interne de chaque Ω est alternativement ouverte vers l'interieur et vers l'extérieur de la bague.

On a ainsi un sommet externe 7a dont les extrémités sont reliées à deux branches 7b et 7c et un sommet interne 9a pourvu des deux mêmes branches 7b et 7c, puisque ces dernières sont communes à deux éléments adjacents.

Cette surface de base définit ainsi avec la génératrice représentée par la hauteur h de la bague 1 des éléments cylindriques, à savoir un élément cylindrique 7 dit élément externe qui est associé au sommet externe 7a et un élément cylindrique 9 dit élément interne qui est associé au sommet interne 9a de la base. L'épaisseur des sommets 7a et 9a ainsi que l'épaisseur des branches 7b et 7c sont sensiblement égales et de faible valeur et sont comprises entre 10% et 25% de la largeur a du sommet externe 7a.

Dans ces conditions on comprend que la structure des éléments cylindriques externes 7 et internes 9 est de type dit ci-après « coque » c'est-à-dire d'une faible épaisseur. Un telle structure est particulièrement intéressante en ce qu'elle permet de conférer à la bague une bonne élasticité lui autorisant une déformation radiale importante tout en restant dans le domaine de sa déformation élastique, ce qui lui permet notamment d'assurer un serrage efficace des pièces à maintenir ainsi qu'expliqué ci-après.

On notera que les éléments internes 9, en raison de la conicité de la surface interne de la bague, ne sont pas rigoureusement cylindriques et seront qualifiés dans le présent texte de « pseudo-cylindriques », c'est-à-dire que ces éléments sont de forme cylindrique à l'exception de la surface interne associée à leur sommet 9a. Cette surface tronconique servant, dans le présent mode de mise en œuvre de l'invention, à assurer la déformation radiale de la bague ainsi qu'expliqué ci-après.

Ainsi que représenté sur les figures 1 à 3 et notamment sur cette dernière, les branches 7b et 7c sont de direction générale de type radiale mais peuvent posséder une structure en « S », la partie des branches proche du sommet étant, vue de l'extérieur, de forme convexe et la partie opposée proche de l'extrémité étant de forme concave.

Une telle disposition permet d'améliorer encore la capacité de déformation de la bague. On comprend que dans cette disposition et contrairement aux bagues de l'état antérieur de la technique les branches travaillent en partie en flexion ce qui a pour conséquence d'améliorer encore leur souplesse et donc leur capacité de déformation radiale.

En jouant sur l'importance de la courbure en S, ainsi également que sur l'épaisseur de la paroi de la coque formant les éléments externes 7 et les éléments internes 9, l'utilisateur aura ainsi la possibilité de contrôler la déformabilité de la bague, et ceci en fonction du type de serrage qu'il souhaite effectuer.

Il a été constaté que dans une telle structure de type coque les zones de contraintes maximales subies par la bague lors de sa déformation radiale se situaient au niveau du milieu des sommets respectifs 7a et 9a des éléments cylindriques externes 7 et des éléments pseudo-cylindriques internes 9. Afin d'améliorer la résistance de ces éléments on a réalisé au centre de la surface interne des sommets 7a et 9a une surépaisseur 11.

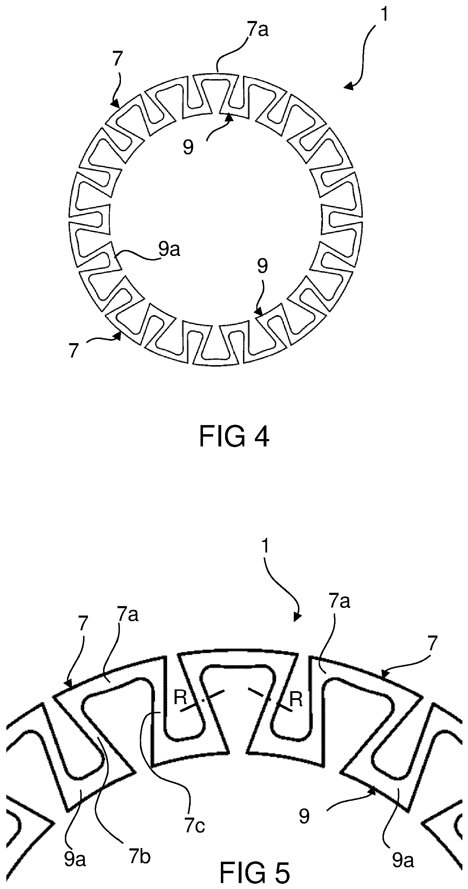

Suivant l'invention, lorsque l'utilisateur souhaite augmenter la rigidité de la bague de serrage il a la possibilité de diminuer la courbure des branches en S et d'arriver, ainsi que représenté sur les figures 4 et 5 à des branches 7b, 7c qui sont rectilignes.

On a représenté sur la figure 6, à titre d'exemple, un mode de mise en oeuvre de la bague de serrage 1 suivant l'invention appliqué à la réalisation d'un mandrin 15 destiné à assurer le maintien d'une pièce à usiner 5. A cet effet, ainsi que précisé précédemment, la base 5a de cette dernière est creusée d'un logement 3 destiné à recevoir la bague de serrage 1.

Le mandrin 15 comprend un corps de mandrin cylindrique 17 qui est disposé dans un orifice 18 d'un support d'outillage 20 dans lequel il est fixé par des vis 23.

La partie supérieure du corps de mandrin 17 se termine par un bossage cylindrique 19 autour duquel est disposée une bague support 21 sur laquelle est disposée la bague de serrage 1.

Le corps de mandrin 17 est creusé d'un alésage axial 25 dans lequel un piston de commande cylindrique 27 est monté coulissant et dont l'extrémité supérieure, sur le dessin, est pourvue d'une tête 29 de plus grand diamètre et de forme externe tronconique, l'angle d'inclinaison de ce tronc de cône par rapport à l'axe longitudinal yy' du mandrin étant identique à celui de l'alésage interne de la bague de serrage 1.

Une plaque 31 formant couvercle et comportant deux bossages circulaires, à savoir un bossage supérieur 31a et un bossage inférieur 31b, est solidarisée du corps de mandrin 17 par une vis 33 avec interposition d'une entretoise 35.

L'alésage axial 25 du corps de mandrin 17 débouche à sa partie inférieure dans un alésage axial 37 de plus grand diamètre qui s'ouvre sur l'extérieur. Un fond de piston 39 dont la périphérie est pourvue d'un joint d'étanchéité 40 avec l'alésage axial 37 est disposé dans ce dernier et est fixé à la base du piston 27 par une vis 41. Un canal d'alimentation en fluide hydraulique sous pression 43 débouche dans l'alésage 37.

Ce dernier est fermé par un couvercle 45 qui est fixé sur le corps de mandrin par des vis 46. Ce couvercle 45 comporte un bossage 47 qui pénètre dans l'alésage 37 et qui est pourvu d'un joint torique 49 assurant l'étanchéité de cet alésage avec l'extérieur. Par ailleurs le couvercle 45 est traversé par un canal d'alimentation en fluide hydraulique 51.

On comprend dans ces conditions que, lorsque le fluide hydraulique est admis dans l'alésage 37 par le canal d'alimentation 43, il déplace le piston de commande 27 vers le bas, si bien que la périphérie tronconique de la tête 29 de celui-ci exerce sur la bague de serrage 1 un effort normal à sa surface de contact se décomposant en une force radiale qui déforme la bague de serrage 1 et l'applique contre la paroi interne cylindrique du logement 3 et un effort axial qui applique la base de la bague de serrage 1 contre la bague support 21, assurant le maintien de la pièce à usiner 5 dans cette position.

Lorsque, notamment après l'usinage, l'on souhaite libérer la pièce à usiner 5, on inverse l'arrivée du fluide sous pression en l'admettant par le canal d'alimentation 51, ce qui a pour effet de soulever le piston 27. Cependant, si la conicité des surfaces en contact de la bague de serrage 1 et de la tête de piston 29 est faible, ces deux éléments risquent d'adhérer l'un à l'autre et la bague de serrage 1 se soulève alors en même temps que le piston 27, et ceci jusqu'à ce que la surface supérieure de la bague de serrage 1 entre en contact avec le bossage circulaire inférieur 31b du couvercle, ce qui a pour effet de les séparer.

La plaque 31 assure ainsi deux fonctions, à savoir une fonction de couvercle assurant une protection du dispositif contre les salissures et les éléments polluants et une fonction de séparation de la bague de serrage 1 et de la tête de piston 29 lors de la phase de démontage de la pièce 5.

On pourrait bien entendu faire appel également à des moyens d'actionnement dans lesquels les conicités de la bague de serrage 1 et de la tête de piston 29 seraient inversées.

On a représenté sur la figure 7 une douille de serrage 1a qui est constituée d'une bague de serrage 1, telle que décrite précédemment, qui est prolongée sur l'un de ses côtés, à savoir vers le bas sur la figure, par une partie de retenue 54 qui est constituée par des jambages 55 qui se terminent par des pieds 57 tournés vers l'extérieur dont le rôle sera précisé ci-après.

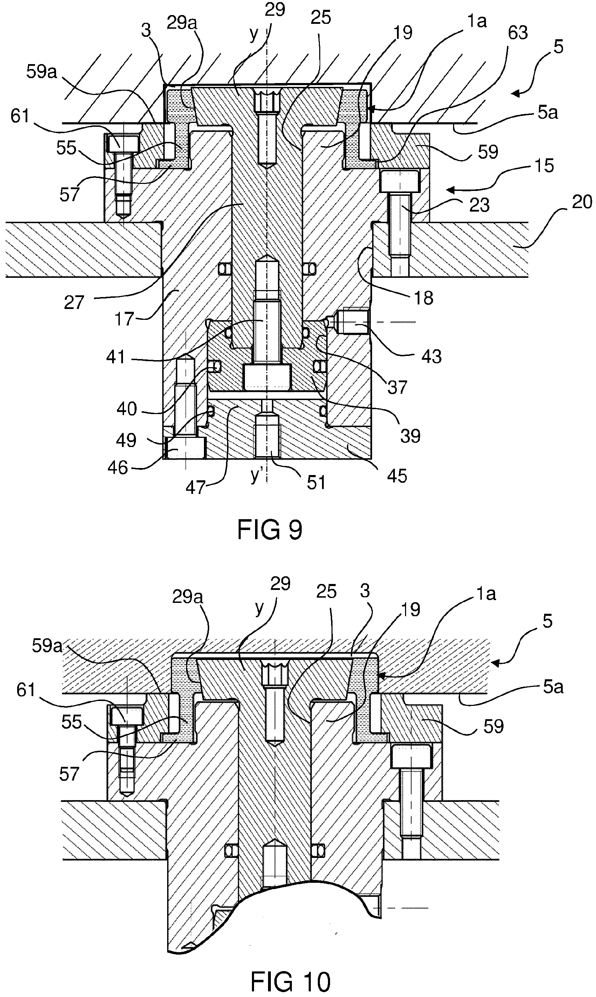

On a représenté sur la figure 9 un exemple d'application de cette douille de serrage dans un mandrin de même type que décrit précédemment et l'on conservera pour cet exemple les mêmes références.

Dans cette application les jambages 55 de la partie de retenue 54 de la douille de serrage 1a viennent s'encastrer sur le bossage 19 du corps de mandrin 17 et les pieds 57 de celle-ci viennent en appui sur la face supérieure du corps de mandrin.

Une collerette de maintien 59 vient en appui sur le corps de mandrin 17, avec lequel elle est fixée par des vis 61. Un alésage 63 est réalisé à la base de la collerette 59 de façon que celle-ci puisse prendre appui sur les pieds 57 de la partie de retenue 54, de façon à assurer sa fixation par rapport au corps de mandrin 17.

La face supérieure 59a de la collerette de maintien 59 forme de plus un plan récepteur destiné à recevoir la base 5a de la pièce à usiner 5. Ainsi, dans ce mode de mise en oeuvre de l'invention, la collerette 59 assure deux fonctions, à savoir une fonction de retenue des pieds 57 de la douille de serrage 1a et une fonction de plan récepteur de la pièce à usiner 5, assurant ainsi un positionnement précis de cette dernière suivant l'axe yy' du mandrin.

On notera que les diamètres respectifs de la tête de piston 29 et de l'alésage interne tronconique de la douille de serrage 1a sont tels que, en position de préserrage, ainsi que représenté sur la figure 9, il existe un jeu entre la base de la tête de piston 29 et la face supérieure du bossage 19, jeu permettant un déplacement vertical ultérieur du piston 27, ainsi qu'expliqué ci-après.

Pour appliquer la pièce à usiner 5 contre la face supérieure 59a de la collerette de retenue 59 et l'y maintenir dans cette position, et ainsi qu'expliqué précédemment, on abaisse le piston 27 en admettant le fluide hydraulique dans l'alésage 37 par le canal d'alimentation 43, si bien que la périphérie tronconique 29a de la tête de piston 29 exerce sur la bague de serrage 1 de la douille 1a un effort normal à sa surface de contact se décomposant en une composante radiale et une composante axiale. Ces efforts radiaux et axiaux sont retransmis à la pièce à usiner 5 par douille 1a, ce qui a pour effet, ainsi que représenté sur la figure 10, d'une part d'appliquer la base de celle-ci contre la face supérieure 59a de la collerette de retenue 59, assurant la fonction de plan récepteur et d'autre part d'assurer le maintien de la pièce à usiner 5 dans cette position.

Ainsi que dans l'exemple précédent, lorsque l'on souhaite libérer la pièce 5, on bascule l'alimentation en fluide hydraulique du canal 43 vers le canal 51 et le fluide hydraulique soulève alors le piston 27 qui libère ainsi la bague de serrage 1 de la douille 1a de tout effort radial, si bien que celle-ci se trouve du même coup désolidarisée d'avec la pièce à usiner 5.

On peut également bien entendu faire appel à une douille de serrage dans laquelle les pieds 57 disposés en extrémité des jambages sont orientés non plus vers l'extérieur mais vers l'intérieur de la douille, ainsi que représenté sur la figure 8.

La présente invention permet ainsi en raison de la structure en type de « coque » de réaliser des éléments cylindriques et/ou pseudo cylindriques qui possèdent une excellente capacité de déformation radiale permettant ainsi de constituer des bagues et des douilles de serrage pouvant posséder une capacité d'expansion, ou de contraction, axiale de l'ordre de 1% à 2% de leur diamètre.

Il est ainsi possible au concepteur d'ajuster la rigidité de la bague et de la douille de serrage en fonction de l'effort de serrage radial qu'il souhaite transmettre et en fonction de l'expansion souhaitée de celles-ci.

Pour un matériau donné de la bague et/ou de la douille de serrage et pour un diamètre déterminé de celle-ci il aura ainsi la possibilité de jouer sur le nombre d'éléments utilisés ainsi que sur leur forme et bien entendu sur l'épaisseur des coques constituants les éléments cylindriques et/ou pseudo-cylindriques.

Préférentiellement la douille de serrage pourra être constituée d'un acier à ressort, notamment un acier à forte teneur en silicium, tel que par exemple un acier de type dit 45SCD7 ou tout autre acier à haute limite élastique.

Bien entendu le dispositif d'actionnement de la douille de serrage peut faire appel à des moyens autres qu'un piston à tête tronconique agissant sur une partie tronconique complémentaire de la douille de serrage. On pourrait ainsi, suivant l'invention, faire appel à des moyens d'actionnement de type cylindrique dont l'augmentation de diamètre exercerait sur la surface interne de la douille de serrage un effort radial.

On pourrait également faire appel à des moyens d'actionnement utilisant une surface tronconique inversée.

Par ailleurs la bague de serrage pourrait être constituée d'éléments internes et externes qui seraient les uns et les autres entièrement cylindriques.

Enfin on pourrait également utiliser la bague et la douille de serrage suivant l'invention en les soumettant à un effort radial s'exerçant de l'extérieur vers l'intérieur de celles-ci, de façon à leur faire subir une contraction radiale.

## Revendications

1. Bague de serrage (1) et de maintien destinée à prendre place dans un logement cylindrique (3) réalisé dans la base (5a) d'une pièce (5) que l'on souhaite immobiliser par rapport à un corps, cette bague de serrage (1) étant formée d'une série d'éléments successifs adjacents (7, 9) cylindriques et/ou pseudo-cylindriques qui sont liés entre eux et dont la surface de base est en forme de oméga et comporte ainsi un sommet (7a, 9a) et deux branches (7b, 7c), les sommets (7a, 9a) de ces éléments (7, 9) étant alternativement disposés sur l'extérieur et sur l'intérieur de la bague de serrage (1) et formant respectivement un élément externe (7) et un élément interne (9), les branches (7b, 7c) reliant deux éléments (7, 9) adjacents étant communes, où les éléments externes (7) et les éléments internes (9) forment des « coques » dont l'épaisseur est comprise entre 10% et 25% de la largeur (a) des sommets (7a) des éléments externes (7), la face intérieure des parois des éléments internes (9) ou externes (7) ayant un sommet (11) pour base comportant une surépaisseur (11).

2. Bague de serrage (1) et de maintien suivant la revendication 1, **caractérisée en ce qu'**au moins les éléments externes (7) ou les éléments internes (9) sont de forme cylindrique.

3. Bague de serrage (1) et de maintien suivant la revendication 1, **caractérisée en ce que** les éléments externes (7) ou les éléments internes (9) sont de forme pseudo-cylindrique.

4. Bague de serrage (1) et de maintien suivant l'une quelconque des revendications précédentes, **caractérisée en ce que** les branches (7b, 7c) qui relient deux éléments adjacents (7, 9) sont en forme de « S ».

5. Bague de serrage (1) et de maintien suivant l'une quelconque des revendications 1 à 3, **caractérisée en ce que** les branches (7b, 7c) qui relient deux éléments adjacents (7, 9) sont rectilignes.

6. Douille de serrage comprenant une bague de serrage (1) suivant l'une quelconque des revendications précédentes, **caractérisée en ce que** la bague de serrage(1) se prolonge axialement d'un côté de celle-ci par un jambage (55) se terminant par des pieds (57).

7. Douille de serrage suivant la revendication 6, **caractérisée en ce que** les pieds (57) sont orientés radialement vers l'extérieur ou vers l'intérieur.

8. Dispositif de serrage destiné au maintien d'une pièce (5) et à l'application de celle-ci sur un plan porteur (59), la base (5a) de la pièce (5) étant creusée d'un logement cylindrique (3), comprenant la bague de serrage (1) suivant l'une des revendications 1 à 5, **caractérisé en ce qu'**il comporte un corps de mandrin cylindrique (17) creusé d'un alésage axial (31) dans lequel est monté coulissant un piston (27) dont la tête tronconique (29) est en appui contre une surface interne tronconique de la bague de serrage (1), des moyens de commande étant aptes à déplacer ce piston (27) axialement de façon à exercer sur la surface interne de la bague de serrage (1) un effort radial apte à la déformer radialement et appliquer sa surface externe contre la paroi cylindrique du logement (3) et la base de la pièce (5) contre le plan porteur (59).

9. Dispositif de serrage destiné au maintien d'une pièce (5) dont la base (5a) est creusée d'un logement cylindrique (3) comprenant la bague de serrage (1)de la douille de serrage (1a) suivant l'une des revendications 6 ou 7, **caractérisé en ce qu'**il comporte un corps de mandrin cylindrique (17) dont l'une des extrémités est pourvue d'un bossage (19) autour duquel prennent place les jambages (55) de la douille de serrage (1a), qui se terminent par les pieds (57) qui sont appliqués contre le corps de mandrin (17), la base (5a) de la pièce (5) à maintenir venant en appui sur une face d'une collerette (59) dont l'autre face est elle-même en appui sur le corps de mandrin (17), ce dernier étant creusé d'un alésage axial (25) dans lequel est monté coulissant un piston (27) dont la tête tronconique (29) est en appui contre la surface interne tronconique de la bague de serrage (1), des moyens de commande étant aptes à déplacer ce piston (27) axialement de façon à exercer sur la surface interne de la bague de serrage (1) un effort radial apte à la déformer radialement et appliquer sa surface externe contre la paroi cylindrique du logement (3), la bague de serrage (1) présentant une capacité d'expansion ou de contraction axiale de l'ordre de 1% à 2% de son diamètre, et étant déformée radialement en restant dans le domaine de sa déformation élastique.

10. Dispositif de serrage suivant la revendication 9, **caractérisé en ce que** les pieds (57) sont maintenus appliqués contre le corps de mandrin (17) par la collerette (59).

## Patentansprüche

1. Spann- (1) und Haltering zum Platzieren in einer zylindrischen Aufnahme (3) in der Basis (5a) eines Werkstücks (5), das in Bezug auf einen Körper arretiert werden soll, wobei dieser Spannring (1) aus einer Reihe aufeinanderfolgender benachbarter zylindrischer und/oder pseudozylindrischer Elemente (7, 9) gebildet ist, die miteinander verbunden sind und deren Basisfläche omegaförmig ist und somit einen Scheitelpunkt (7a, 9a) und zwei Schenkel (7b, 7c) umfasst, wobei die Scheitelpunkte (7a, 9a) dieser Elemente (7, 9) abwechselnd an der Außenseite und an der Innenseite des Spannrings (1) angeordnet sind und jeweils ein äußeres Element (7) und ein inneres Element (9) bilden, wobei die Schenkel (7b, 7c), die zwei benachbarte Elemente (7, 9) verbinden, gemeinsam sind, wobei die äußeren Elemente (7) und die inneren Elemente (9) "Schalen" bilden, deren Dicke zwischen 10 % und 25 % der Breite (a) der Scheitelpunkte (7a) der äußeren Elemente (7) liegt, wobei die Innenseite der Wände der inneren (9) oder äußeren Elemente (7) einen Scheitelpunkt (11) als Basis mit einer Verdickung (11) hat.

2. Spann- (1) und Haltering nach Anspruch 1, **dadurch gekennzeichnet, dass** wenigstens die äußeren Elemente (7) oder die inneren Elemente (9) zylinderförmig sind.

3. Spann- (1) und Haltering nach Anspruch 1, **dadurch gekennzeichnet, dass** die äußeren Elemente (7) oder die inneren Elemente (9) pseudozylinderförmig sind.

4. Spann- (1) und Haltering nach einem der vorhergehenden Ansprüche, **dadurch gekennzeichnet, dass** die Schenkel (7b, 7c), die zwei benachbarte Elemente (7, 9) verbinden, "S"-förmig sind.

5. Spann- (1) und Haltering nach einem der Ansprüche 1 bis 3, **dadurch gekennzeichnet, dass** die Schenkel (7b, 7c), die zwei benachbarte Elemente (7, 9) verbinden, gerade sind.

6. Spannhülse, die einen Spannring (1) nach einem der vorhergehenden Ansprüche umfasst, **dadurch gekennzeichnet, dass** sich der Spannring (1) auf einer Seite davon axial durch ein Bein (55) verlängert, das mit Füßen (57) endet.

7. Spannhülse nach Anspruch 6, **dadurch gekennzeichnet, dass** die Füße (57) radial nach außen oder nach innen gerichtet sind.

8. Spannvorrichtung zum Halten eines Werkstücks (5) und zum Anlegen desselben an einer tragenden Ebene (59), wobei die Basis (5a) des Werkstücks (5) von einer zylindrischen Aufnahme (3) ausgehöhlt ist, umfassend den Spannring (1) nach einem der Ansprüche 1 bis 5, **dadurch gekennzeichnet, dass** sie einen zylindrischen Spannfutterkörper (17) umfasst, der von einer axialen Bohrung (31) ausgehöhlt ist, in der ein Kolben (27) gleitend angebracht ist, dessen kegelstumpfförmiger Kopf (29) an einer kegelstumpfförmigen Innenfläche des Spannrings (1) anliegt, wobei Steuermittel imstande sind, diesen Kolben (27) axial zu bewegen, so dass auf die Innenfläche des Spannrings (1) eine radiale Kraft ausgeübt wird, die imstande ist, ihn radial zu verformen und seine Außenfläche gegen die zylindrische Wand der Aufnahme (3) und die Basis des Werkstücks (5) gegen die tragende Ebene (59) zu drücken.

9. Spannvorrichtung zum Halten eines Werkstücks (5), dessen Basis (5a) von einer zylindrischen Aufnahme (3) ausgehöhlt ist, umfassend den Spannring (1) der Spannhülse (1a) nach einem der Ansprüche 6 oder 7, **dadurch gekennzeichnet, dass** sie einen zylindrischen Spannfutterkörper (17) umfasst, von dem eins der Enden mit einer Erhebung (19) versehen ist, um die sich die Beine (55) der Spannhülse (1a), die mit den Füßen (57) enden, platzieren, die gegen den Spannfutterkörper (17) angelegt sind, wobei die Basis (5a) des zu haltenden Werkstücks (5) an einer Seite eines Bundes (59) in Anlage kommt, dessen andere Seite selbst am Spannfutterkörper (17) anliegt, wobei dieser Letztere von einer axialen Bohrung (25) ausgehöhlt ist, in der ein Kolben (27) gleitend angebracht ist, dessen kegelstumpfförmiger Kopf (29) an der kegelstumpfförmigen Innenfläche des Spannrings (1) anliegt, wobei Steuermittel imstande sind, diesen Kolben (27) axial zu bewegen, so dass auf die Innenfläche des Spannrings (1) eine radiale Kraft ausgeübt wird, die imstande ist, ihn radial zu verformen und seine Außenfläche gegen die zylindrische Wand der Aufnahme (3) zu drücken, wobei der Spannring (1) eine Fähigkeit zur axiale Ausdehnung oder Kontraktion in der Größenordnung von 1 % bis 2 % seines Durchmessers aufweist und radial verformt ist, während er im Bereich seiner elastischen Verformung bleibt.

10. Spannvorrichtung nach Anspruch 9, **dadurch gekennzeichnet, dass** die Füße (57) durch den Bund (59) am Dornkörper (17) anliegend gehalten werden.

## Claims

1. A clamping and holding ring (1) for being placed in a cylindrical housing (3) made in the base (5a) of a part (5) desired to be immobilised with respect to a body, this clamping ring (1) being formed of a series of successive adjacent cylindrical and/or pseudo-cylindrical elements (7, 9) which are connected to each other and whose base surface is omega-shaped and thus includes a vertex (7a, 9a) and two branches (7b), 7c), the vertices (7a, 9a) of these elements (7, 9) being alternately disposed on the exterior and on the interior of the clamping ring (1) and forming respectively an outer element (7) and an inner element (9), the branches (7b, 7c) connecting two adjacent elements (7, 9) being common, wherein the outer elements (7) and the inner elements (9) form "shells" whose thickness is between 10% and 25% of the width (a) of the vertices (7a) of the outer elements (7), the interior face of the walls of the inner (9) or outer (7) elements having a vertex (11) as a base having an extra thickness (11).

2. The clamping and holding ring (1) according to claim 1, **characterised in that** at least the outer elements (7) or the inner elements (9) are cylindrical in shape.

3. The clamping and holding ring (1) according to claim 1, **characterised in that** the outer elements (7) or the inner elements (9) are pseudo-cylindrical in shape.

4. The clamping and holding ring (1) according to any of the preceding claims, **characterised in that** the branches (7b, 7c) that connect two adjacent elements (7, 9) are "S" shaped.

5. The clamping and holding ring (1) according to any of claims 1 to 3, **characterised in that** the branches (7b, 7c) that connect two adjacent elements (7, 9) are rectilinear.

6. A clamping sleeve comprising a clamping ring (1) according to any of the preceding claims, **characterised in that** the clamping ring (1) axially extends on one side thereof to a leg (55) terminating in feet (57).

7. The clamping sleeve according to claim 6, **characterised in that** the feet (57) are radially outwardly or inwardly oriented.

8. A clamping device for holding a part (5) and for applying it to a bearing plane (59), the base (5a) of the part (5) being hollowed out as a cylindrical housing (3), comprising the clamping ring (1) according to one of claims 1 to 5, **characterised in that** it comprises a cylindrical mandrel body (17) hollowed out as an axial bore (31) in which a piston (27) with a frustoconical head (29) is slidingly mounted bears against a frustoconical inner surface of the clamping ring (1), control means being able to move this piston (27) axially so as to exert on the inner surface of the clamping ring (1) a radial force capable of deforming it radially and applying its outer surface against the cylindrical wall of the housing (3) and the base of the part (5) against the bearing plane (59).

9. A clamping device for holding a part (5) whose base (5a) is hollowed out as a cylindrical housing (3) comprising the clamping ring (1) of the clamping sleeve (1a) according to one of claims 6 or 7, **characterised in that** it comprises a cylindrical mandrel body (17) one of the ends of which is provided with a boss (19) around which are placed the legs (55) of the clamping sleeve (1a), which terminate in the feet (57) which are applied against the mandrel body (17), the base (5a) of the part (5) to be held bearing against a face of a collar (59) the other face of which is itself bearing against the mandrel body (17), the latter being hollowed out as an axial bore (25) in which a piston (27) is slidingly mounted, the frustoconical head (29) of which is bearing against the frustoconical inner surface of the clamping ring (1), control means being able to move this piston (27) axially so as to exert on the inner surface of the clamping ring (1) a radial force capable of deforming it radially and applying its outer surface against the cylindrical wall of the housing (3), the clamping ring (1) having an axial expansion or contraction capacity in the order of 1% to 2% of its diameter, and being radially deformed while remaining in the region of its elastic deformation.

10. The clamping device according to claim 9, **characterised in that** the feet (57) are held applied against the mandrel body (17) by the collar (59).
